# EUROPEAN PATENT APPLICATION

(11) **EP 1 217 422 A1**
(43) Date of publication of application: **26.06.2002**
(21) Application number: 99974079.8
(22) Date of filing: 01.10.1999
(51) Int. Cl.: G02F 1/1335, G09F 9/00

(54) **LIQUID CRYSTAL DISPLAY PANEL AND ELECTRONIC APPARATUS USING IT**

(71) Applicant: Citizen Watch Co. Ltd., Tokyo 188-8511 (JP)
(72) Inventor: AKIYAMA, Takashi, Citizen Watch Co., Ltd., Tokorozawa-shi, Saitama 359-8511 (JP)
(74) Representative: Prüfer, Lutz H., Dipl.-Phys.
(86) International application number: JP9905425
(87) International publication number: WO0125841

(57) **Abstract**

A liquid crystal display panel (5) is structured by optical filters (2) disposed on both sides of a liquid crystal cell (3), each optical filter transmitting a linearly polarized light which vibrates in a direction parallel with a transmittable axis thereof (1a), and each optical filter reflecting a linearly polarized light which vibrates in a direction crossing a transmittable axis thereof (1a) at right angles, and absorption-type polarizing films (1) disposed outside the respective optical filters (2), each absorption-type polarizing film transmitting a linearly polarized light which vibrates in a direction parallel with a transmittable axis thereof (2a), and each absorption-type polarizing film absorbing a linearly polarized light which vibrates in a direction crossing a transmittable axis thereof (2a) at right angles, wherein respective transmittable axial directions thereof align with each other. An electronic apparatus is structured by turnably connecting the liquid crystal display panel (5) to an apparatus body provided with an operating function section.

## Description

### TECHINICAL FIELD

The invention relates to a liquid crystal display panel (liquid crystal display unit) capable of effecting display on both faces thereof, and an electronic apparatus using the same.

### BACKGROUND TECHNOLOGY

There have been recently widely developed downsized portable information instruments which are excellent in portability such as a sub-notebook type, a notebook type, a book-sized type information instrument (hereinafter referred to as "notebook information instrument"), or an electronic databook and a PDA (Personal Digital Assistant) which are smaller than the notebook information instrument with the improvement of throughput of a computer, the development of downsizing of an IC chip and the reduction of power consumption.

Most of the notebook information instrument comprises a keyboard and a liquid crystal display panel which are connected to each other so as to be opened and closed, wherein normally, the liquid crystal display panel is opened from a state where the keyboard and the liquid crystal display panel are twice-folded while they face each other, and a user inputs data using a keyboard while viewing a screen of the liquid crystal display panel. Recently, there has been proposed a notebook information instrument which is used together with a touch panel as an auxiliary input unit.

There are many downsized portable information instruments having no keyboard, a so-called keyboard-less structure wherein all operations are effected through a touch panel, which is particularly excellent in portability and operability. There are proposed downsized portable information instruments having a variety of functions such as communication function, text edit function (word process function), and also those having spreadsheet function and image display function.

With such notebook information instrument or downsized portable information instrument, the former employs input means mainly comprised of a keyboard, while the latter employs input means mainly comprised of a touch panel so as to perform respective functions and convenience.

Meanwhile, although the notebook information instrument can efficiently perform an input operation but it is inconvenient when viewing image information because the liquid crystal display panel has to be opened even if the input operation through a keyboard is not necessary while merely viewing image information. On the contrary, the downsized portable information instrument is convenient when viewing image information but it is inefficient owing to a troublesome input operation as the number of characters to be inputted increases because information has to be inputted mainly through a touch panel.

Accordingly, there has been developed downsized portable information instruments serving both conveniences, namely, being excellent in convenience when viewing image information like a downsized portable information instrument, and capable of efficiently performing an input operation through a keyboard like a notebook information instrument depending on circumstances.

For example, as disclosed in Japanese Patent Laid-Open Publication No. 9-282051, a liquid crystal display panel is attached to a personal computer body provided with a keyboard to be turned through 180° in horizontal direction so that a display of a liquid crystal display panel can be viewed by a person opposite to an operator of a keyboard. This is effectively utilized in a presentation, and the like.

However, with a conventional personal computer, a person opposite to an operator, who operates the personal computer while viewing a screen of the liquid crystal display panel, cannot view the same screen at the same time, and hence the liquid crystal display panel has to be turned every time the person opposite to the operator views the screen, and hence usability is not good.

Accordingly, there is provided a liquid crystal display panel capable of effecting display on both faces so that the same screen can be viewed at both sides at the same time.

For example, two sheets of liquid crystal display panels each capable of effecting display on one face are bonded to each other to construct a single liquid crystal display panel capable of effecting display on both faces. However, since two sheets of liquid crystal display panels are used in this case, a cost, a thickness, a weight and power consumption are all doubled, and hence it has not been put to practical use.

In addition to the above liquid crystal display panel, Japanese Patent Laid-Open Publication No. 5-150233 discloses that a reflector which is slid while interlocked with the open/close operation of a liquid crystal display panel, wherein the reflector is moved to a back face side when viewing from a front face, while the reflector is moved to a front face side when viewing from the back face, so that the display can be viewed from both faces.

However, the liquid crystal display panel has a drawback that the reflector is hardly moved between both faces thereof because of its thin thickness so that a construction for building rollers in the liquid crystal display panel for moving the reflector is hardly put to practical use as a demand of further downsizing of the downsized portable information instrument increases. Further, as amount of information increases, the size of the liquid crystal display panel has to be increased to increase the display capacity of the liquid crystal display panel. Accompanied by this, the amount of movement of the reflector has to be increased, resulting in the increase of diameters of rollers and the increase of the number of rollers, so that the downsized portable information instrument has a construction even contrary to the requirement of downsizing. Further, if such a downsized portable information instrument is put to practical use, it is necessary to enhance a mechanical endurance of a complex moving mechanism of a reflector.

There is a display unit, as disclosed in Japanese Patent Laid-Open Publication No. 8-184821, comprising a liquid crystal display panel having two display faces, i.e. a face for effecting reflection-type display and another face for effecting transparent-type display, and light emitting-type display panel using light emitting elements wherein both the liquid crystal display panel and the light emitting-type display panel are turnably connected to each other. When both display panels are closed, the light emitting-type display panel functions as a backlight of the liquid crystal display panel capable of effecting dual-sided display, thereby effecting transparent-type display.

According to this display unit, when two display panels are opened, information can be displayed on the face for effecting reflection-type display of the liquid crystal display panel and on the display face of the light emitting-type display panel so that it is very convenient depending on uses. However, if this display unit is applied to a downsized portable information instrument provided with a normal keyboard, there is no space for disposing the keyboard thereon.

The light emitting-type display panel has a drawback that it consumes much power. Further, although the light emitting-type display panel is used as a backlight of the liquid crystal display panel when both display panels are closed, fairly large amount of emitting light is needed for a user to view information on the display even at a bright place, thereby requiring much more power consumption.

Still further, according to this display unit, the ratio between the amount of reflection of incident light and the amount of transmission of incident light is adjusted using optical filters for the liquid crystal display panel.

However, if the amount of reflection of incident light is increased, visibility of the reflection-type display is improved in a state where both display panels are opened, but the amount of transmission of incident light for effecting transparent-type display is reduced in a state where both display panels are closed, so that luminance of the backlight has to be increased, thereby increasing power consumption. On the other hand, if the amount of transmission of incident light is increased, the transparent-type display becomes bright in a state where both display panels are closed so that the amount of emission of the liquid crystal display panel serving as a backlight can be decreased, but the amount of reflection of incident light is decreased in a state where both display panels are open, whereby the reflection-type display becomes dark, and hence the display is rendered difficult to be viewed.

This display unit has a problem as set forth above that a display performance of the liquid crystal display panel in the open state and that in the close state are incompatible with each other, and hence it is difficult to set the display performance in both states at a practical level.

There are yet provided liquid crystal display panels capable of always effecting dual-sided display by use of a transparent-type liquid crystal display panel in addition to a liquid crystal display panel formed by bonding two sheets thereof.

However, the transparent-type liquid crystal display panel has a drawback that it functions as an optical shutter for switching between transmission and absorption of incident light by selectively applying a voltage, so that a background on a face opposite to a visible side can be viewed through the liquid crystal display panel. As a result, the display and the background are mixed with each other, rendering the display very difficult to be viewed.

There was another problem that a reflector or a backlight could not be disposed on the back face side of the liquid crystal display panel, a sufficient amount of transmission of incident light can not be obtained.

Japanese Patent Laid-Open Publication No. 7-218899 discloses a liquid crystal display unit having a polarizing film and a transparent input panel respectively disposed on both sides of a liquid crystal cell.

However, since this liquid crystal display unit has neither reflector nor auxiliary light source on a face opposite to a visible side, incident light is absorbed by the polarizing film on a display portion so that it can be viewed as black while a transmission portion other than the display portion is viewed as dark which is not more than half thereof because the background at the opposite side face is reduced in light by the polarizing film so that it is very low in visibility compared with an ordinary liquid crystal display unit provided with a reflector.

Further, since this liquid crystal display unit has another problem that the background and the display of characters and the like are mixed with each other, such a problem can be improved by disposing shading control plates (photochromic glass) respectively outside the liquid crystal display panel each comprised of polarizing film on both sides of a liquid crystal cell, and switching a shading condition of the shading control plate disposed opposite to a visible side of the liquid crystal display unit in synchronization with timing when the visible side is changed from one face to the other face, thereby preventing the background, characters and the like from being mixed with each other.

However, if the shading control plates are provided on both faces of the liquid crystal display panel, the entire thickness of the liquid crystal display unit becomes large. Particularly, if photochromic glass is used for the shading control plates, a total thickness of the shading control plates is increased by the thickness equivalent to a total thickness of not more than four pieces of glasses, so that such a liquid crystal display unit is undesirable for the downsized portable information instrument which requires further downsizing. Still further, since the photochromic glass has to be always controlled by applying a voltage, it contradicts to the requirement of small power consumption.

The conventional liquid crystal display panels set forth above capable of viewing a display from both faces have inevitable problems when they are put to practical use. Accordingly, there have been many problems to realize a downsized portable information instrument having two functions, namely, a first function for display means mainly composed of a touch panel and a second function for a notebook information instrument capable of performing a keyboard operation.

The invention has been developed to solve the foregoing problems, and has an object to provide a liquid crystal display panel capable of effecting a dual-sided display with good visibility without rendering the construction thereof complex, a thickness thereof thick and power consumption large, and also provide an electronic apparatus capable of viewing clear display in high contrast even if the liquid crystal display panel is closed or opened, which apparatus is also excellent in portability and less in power consumption.

### DISCLOSURE OF THE INVENTION

To achieve the above object, the liquid crystal display panel of the invention comprises a liquid crystal cell formed of a pair of transparent substrates having transparent electrodes on the opposite inner surfaces thereof and a liquid crystal layer sealed between the pair of transparent substrates, optical filters disposed on both sides of the liquid crystal cell, each optical filter transmitting a linearly polarized light which vibrates in a direction parallel with a transmittable axis thereof, and each optical filter reflecting a linearly polarized light which vibrates in a direction crossing a transmittable axis thereof at right angles, and absorption-type polarizing films disposed outside the respective optical filters, each absorption-type polarizing film transmitting a linearly polarized light which vibrates in a direction parallel with a transmittable axis thereof, and each absorption-type polarizing film absorbing a linearly polarized light which vibrates in a direction crossing a transmittable axis thereof at right angles.

The optical filter and the absorption type polarizing film disposed on the same side of the liquid crystal cell are arranged such that respective transmittable axial directions thereof substantially align with each other.

With the liquid crystal display panel, a light scattering member is disposed in at least one space of a space between the liquid crystal cell and one optical filter and a space between the liquid crystal cell and the other optical filter.

The reflection type polarizing film may be used as the optical filters.

Alternatively, the optical filters may be constructed by disposing quarter-wavelength plates on both sides of a separating sheet for circularly polarized light which reflects one part of right-circularly polarized light component and left-circularly polarized light of incident light while transmits the other part thereof.

Although twisted nematic (TN) liquid crystal or supertwisted nematic (STN) liquid crystal may be used as the liquid crystal layer of the liquid crystal cell, an optical retardation compensation film is disposed on one surface of the liquid crystal cell when the STN liquid crystal is used.

If the liquid crystal display panel of the invention is viewed from a front face, the linearly polarized light component of incident light from the front face, which vibrates in a direction parallel with a transmittable axis of the absorption type polarizing film, is transmitted through the absorption type polarizing film, and also transmitted through the optical filter because the transmitted linearly polarized light component also vibrates in a direction parallel with the transmittable axis of the optical filter and then it falls on the liquid crystal cell. The linearly polarized light component transmitted through the liquid crystal cell falls on the optical filter disposed on the back surface side of the liquid crystal cell.

If the optical filter is disposed such that a vibration direction of the linearly polarized light component emitted from the liquid crystal cell and the transmittable axis of the optical filter disposed on the back surface side of the liquid crystal cell cross each other at right angles in a state where no voltage is applied to the liquid crystal cell, the linearly polarized light component which fell on the optical filter is reflected by the same optical filter. The reflected linearly polarized light component is returned again to the liquid crystal cell, so that it is transmitted through the optical filter and the absorption-type polarizing film disposed on the front surface side, then it is returned to the visible side.

However, when a voltage is applied to the liquid crystal cell, the liquid crystal cell is turned on, and the linearly polarized light component which fell on the liquid crystal cell is optically rotated through 90° (in the case of the TN liquid crystal cell), and the linearly polarized light component which emitted from the liquid crystal cell is transmitted through the optical filter disposed on the back surface side of the liquid crystal cell because it vibrates in the direction aligning with the transmittable axis of this optical filter, and also it is also transmitted through the absorption-type polarizing film disposed on the back surface side of the liquid crystal cell because the absorption-type polarizing film is disposed in the direction substantially aligning with the transmittable axis of the optical filter, and then it is emitted from the back surface of the absorption-type polarizing film.

Since no member having reflective property is disposed on the back surface of the liquid crystal cell, light which fell on from the visible side is emitted toward the back surface, and is not returned again to the visible side.

As set forth above, when viewing from the front face, reflection/no reflection of incident light from the visible side can be controlled by turning on/off the liquid crystal cell so that the liquid crystal display panel functions as black-and-white reflection-type liquid crystal display panel.

Even when viewing from the back face, the configuration of the constituent members are completely the same as the case when viewing from the front face but only the directions of incident light and reflected light are reverse to the case when viewing from the front face so that reflection/non-reflection of incident light from the visible side can be controlled by turning on/off the liquid crystal cell. That is, even when viewing from the back face, the liquid crystal display panel functions as a black-and-white reflection-type liquid crystal display panel having the same performance as the case when viewing from the front face.

When the light scattering film is disposed between the liquid crystal filter and at least one optical filter, light which is returned to the visible side when it is reflected by the optical filter on the side opposite to the incident light side is moderately scattered so that the light can be seen opaque white on the visible side, thereby effecting a soft display.

Accordingly, the liquid crystal display panel of the invention can realize a dual-sided display in good visibility equally at the same time, and further the construction thereof is relatively simple and the thickness thereof is not bulky, and also power consumption is not increased.

The electronic apparatus of the invention comprises the liquid crystal display panel, and an apparatus body provided with an operating function section, wherein the liquid crystal display panel and the apparatus body are turnably connected to each other, thereby achieving the foregoing object.

Further, if a pen tablet is disposed on at least one side of the liquid crystal display panel for inputting information through a pen, at least one face of the liquid crystal display panel serves as an input unit.

Still further, if there are provided open/close detection means for detecting an open/close state of the liquid crystal display panel relative to the apparatus body and inverting means for inverting the display by the liquid crystal display panel in the direction of at least vertical or horizontal direction either at an open state or at a close state in response to the result of detection by the open/close detection means, the direction of displayed information becomes the same even when viewing from any side.

There are provided, as the open/close detection means, a protrusion on either side of the liquid crystal display panel or the apparatus body, and a press-type switch on the other side thereof so as to oppose the protrusion.

Alternatively, a light emitting portion is provided on either side of the liquid crystal display panel or the apparatus body, and light receiving portion having a photosensor is provided on the other side thereof so as to oppose the light emitting portion.

With the electronic apparatus, it is possible to turnably attach a protective cover onto the apparatus body and the protective cover is capable of covering the liquid crystal display panel from the outside.

If a light absorbing member is disposed on the face of the protective cover opposite to the liquid crystal display panel, visibility from the opposite face can be improved by a large extent.

It is possible to dispose an absorption-type polarizing film on the face of the protective cover opposite to the liquid crystal display panel, and a transmittable axis of the absorption-type polarizing film and a transmittable axis of the absorption-type polarizing film disposed on the side of the protective cover of the liquid crystal display panel may cross each other at right angles.

With the electronic apparatus having the foregoing construction, the liquid crystal display panel functions as a reflection-type liquid crystal display panel which can be viewed from both faces at the same time, so that a user of the electronic apparatus can select using manner which is excellent in portability or operability depending on the object of use, thereby improving practicability there of. Yet, it is possible to realize an electronic apparatus having the thickness and weight which are substantially the same as those of the conventional electronic apparatus provided with one-sided liquid crystal display panel without increasing power consumption.

### BRIEF DESCRIPTION OF DRAWINGS

Fig. 1 is an exploded perspective view showing the construction of a first embodiment of a liquid crystal display panel according to the invention.
Fig. 2 is a view explaining the operation of an absorption-type polarizing film of the liquid crystal display panel.
Fig. 3 is a view explaining the operation of an optical filter.
Fig. 4 is a side view of a first embodiment of an electronic apparatus according to the invention wherein only a liquid crystal display panel is shown by a sectional view.
Fig. 5 and Fig. 6 are schematic perspective views showing respectively an open state and a close state of the liquid crystal display panel of the electronic apparatus.
Fig. 7 is an exploded perspective view showing the construction of a second embodiment of a liquid crystal display panel according to the invention.
Fig. 8 is an exploded perspective view showing the construction of a third embodiment of a liquid crystal display panel according to the invention.
Fig. 9 is a schematic sectional view of the liquid crystal display panel.
Fig. 10 is a schematic enlarged sectional view showing the construction of an STN liquid crystal cell in Fig. 9.
Fig. 11 is a view showing a planar configuration among respective constituent members of the liquid crystal display panel shown in Fig. 8 and Fig. 9.
Fig. 12 is a side view of a second embodiment of an electronic apparatus according to the invention wherein only a liquid crystal display panel is shown by a sectional view.
Fig. 13 is a schematic perspective view showing a manner of inputting data while touching a display by a pen in a state where the liquid crystal display panel of the electronic apparatus is closed.
Fig. 14 and Fig. 15 are schematic perspective views showing respectively an open state and a close state of the liquid crystal display panel of the electronic apparatus according to a third embodiment.
Figs. 16 and 17 are views respectively explaining the relation between a scanning direction by a scan driving IC built in the electronic apparatus of the third embodiment of the invention and a displayed state.
Fig. 18 is a circuit diagram showing an example of an data inverting circuit which built in an apparatus body of the electronic apparatus of the third embodiment of the invention.
Fig. 19 is a schematic perspective view showing a state where the liquid crystal display panel is closed when the data inverting circuit of the electronic apparatus of the third embodiment of the invention is operated.
Fig. 20 and Fig. 21 are schematic perspective views respectively showing a state where the liquid crystal display panel is opened wherein the electronic apparatus of the third embodiment of the invention is provided with different open/close detection means.
Fig. 22 is a circuit diagram showing the construction of the open/close detection means provided on the electronic apparatus shown in Fig. 21.
Fig. 23 is a schematic perspective view showing a state where a liquid crystal display panel and a protective cover of an electronic apparatus according to a fourth embodiment of the invention are respectively opened.
Fig. 24 is a schematic perspective view showing a state where the liquid crystal display panel and the protective cover are closed.
Fig. 25 is a schematic perspective view showing a state where the liquid crystal display panel which is closely brought into contact with the protective cover is opened relative to an apparatus body.
Fig. 26 is a schematic perspective view showing a modified example of Fig. 23 wherein a protective cover is covered with a light absorbing member.
Fig. 27 is a schematic perspective view showing a state where the liquid crystal display panel which is closely brought into contact with the protective cover is opened relative to an apparatus body.
Fig. 28 is a schematic perspective view showing another modified example of Fig. 23 wherein an absorption-type polarizing film is bonded to a protective cover.
Fig. 29 is an exploded perspective view explaining the relation between a transmittable axis of the liquid crystal display panel of the electronic apparatus in Fig.28 and a transmittable axis of the absorption-type polarizing film of the electronic apparatus in Fig.28.

### BEST MODE FOR CARRYING OUT THE INVENTION

A best mode for carrying out a liquid crystal display panel and an electronic apparatus using the same are described in detail hereinafter with reference to the attached drawings.

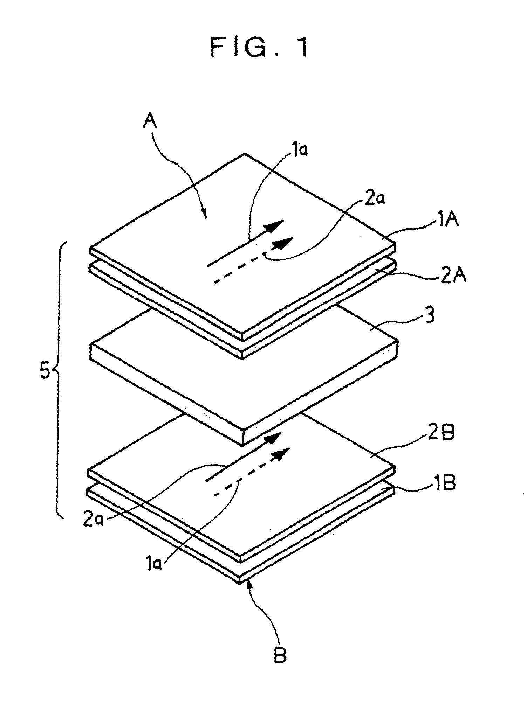

### First Embodiment of Liquid Crystal Display Panel: Fig. 1 to Fig. 3

The first embodiment of the liquid crystal display panel of the invention is first described with reference to Fig. 1 to Fig. 3.

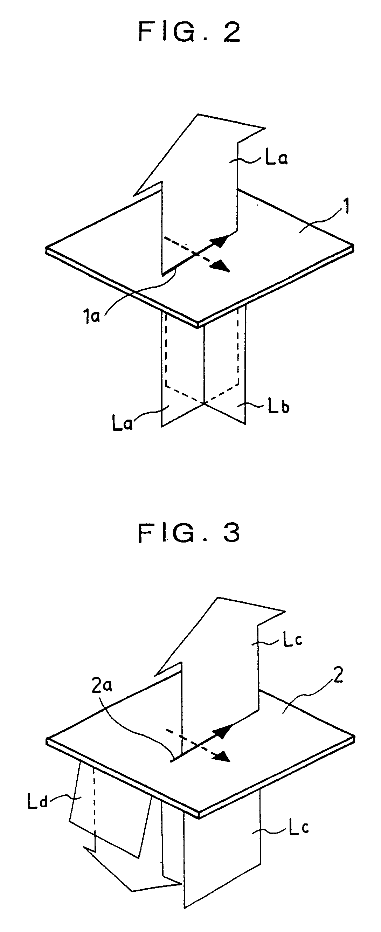

Fig. 1 is an exploded perspective view showing the construction of the first embodiment of the liquid crystal display panel according to the invention, Fig. 2 is a view explaining the operation of an absorption-type polarizing film of the liquid crystal display panel, and Fig. 3 is a view explaining the operation of an optical filter.

A liquid crystal display panel 5 according to the first embodiment comprises, as shown in Fig. 1, a liquid crystal cell 3, upper and lower optical filters 2A, 2B which are respectively disposed on both sides of the liquid crystal cell 3, and upper and lower absorption-type polarizing films 1A, 1B respectively disposed outside the upper and lower optical filters 2A, 2B.

Although an internal construction of the liquid crystal cell 3 according to the first embodiment is not illustrated, the liquid crystal cell 3 comprises a pair of transparent substrates (glass substrates) having transparent electrodes on the opposite inner surfaces thereof and a liquid crystal layer sealed between the pair of transparent substrates like a liquid crystal cell of a generally used conventional liquid crystal display panel.

If a twisted nematic (TN) liquid crystal having a twist angle of 90 degrees is used for the liquid crystal layer, a linearly polarized light component of incident light can be optically rotated through 90 degrees. The transparent electrodes formed on the opposite inner surfaces of the pair of substrates are formed of transparent conductive films made of indium tin oxide (ITO) and the like, and opposite to multiple display electrodes (pixel electrodes), wherein when a voltage is applied between the electrodes, liquid crystal molecules of the liquid crystal layer uprise so that light can be emitted without optically rotating the linearly polarized component of the incident light while keeping an incident angle. That is, when a voltage is applied or not applied between the respective electrodes, a vibration direction of linearly polarized light of incident light can be switched to 0 degree or to 90 degrees.

The absorption-type polarizing films 1A, 1B are general polarizing films fabricated by dying a drawn film dyed with iodine or double colored pigment. The absorption-type polarizing films 1A, 1B transmit linearly polarized light La which vibrates in parallel with a transmittable axis 1a, as shown by an absorption-type polarizing film 1 shown in Fig. 2, while they absorb linearly polarized light Lb which vibrates in a direction crossing the transmittable axis 1a at right angles (in a direction rotated through 90 degrees by an arrow with broken lines).

The optical filters 2A, 2B in Fig. 1 transmit linearly polarized light Lc which vibrates in parallel with a transmittable axis 2a thereof, as shown by the optical filter 2 shown in Fig. 3, while they reflect linearly polarized light Ld which vibrates in a direction crossing the transmittable axis 2a at right angles (in a direction rotated through 90 degrees by an arrow with broken lines).

The reflection-type polarizing films having forgoing properties may be used as the optical filters. Alternatively, the optical filters having the foregoing properties may be constructed by disposing quarter wavelength films are disposed on both sides of a separating sheet for circularly polarized light which reflects one circularly polarized light component of incident light, and transmits the other circularly polarized component of the incident light. The detail of such optical filters is described later.

Both the absorption-type polarizing film 1A and the optical filter 2A disposed over the liquid crystal cell 3 and the absorption-type polarizing film 1B and the optical filter 2B disposed under the liquid crystal cell 3 respectively constituting the liquid crystal display panel 5 in Fig. 1 are respectively disposed in such a manner that the transmittable axis 1a of the absorption-type polarizing film 1A and the transmittable axis 2a of the optical filter 2A are arranged to be parallel with each other so that the directions thereof are substantially aligned with each other. Further, according to this embodiment, the transmittable axes 1a, 1a of the absorption-type polarizing films 1A, 1B and the transmittable axes 2a, 2a of the optical filters 2A, 2B respectively depicted by the arrows with solid lines and arrows with broken lines are all disposed to become in substantially the same direction.

With the liquid crystal display panel 5 having the foregoing construction, the following display conditions are obtained when viewing a first display face A (upper side in Fig. 1) and when viewing from a second display face B (lower side in Fig. 1).

When viewing the liquid crystal display panel 5 from the first display face A side, since the transmittable axis 1a of the upper absorption-type polarizing film 1A and the transmittable axis 2a of the upper optical filter 2A disposed adjacent to the inner side thereof are parallel with each other, the linearly polarized light components of incident light which vibrate in the direction parallel with the transmittable axes 1a, 2a are transmitted through the upper absorption-type polarizing film 1A and the upper optical filter 2A, then reach the liquid crystal cell 3.

At this time, at the portion of the liquid crystal cell 3 where no voltage is applied, the vibration direction of the linearly polarized light component is optically rotated through 90 degrees inside the liquid crystal cell 3, then the linearly polarized light component is emitted from the liquid crystal cell 3. Although the emitted light falls on the lower optical filter 2B under the liquid crystal cell 3, it crosses the transmittable axis 2a of the lower optical filter 2B at right angles when the vibration direction of the linearly polarized light component is optically rotated through 90 degrees. Accordingly, the linearly polarized light component is reflected by the lower optical filter 2B and returned to the first display face A.

Since this reflected light is again optically rotated through 90 degrees when transmitted through the liquid crystal cell 3, the vibration direction of the linearly polarized light becomes parallel with the transmittable axis 2a of the upper optical filter 2A and also parallel with the transmittable axis 1a of the upper absorption-type polarizing film 1A, and hence it is transmitted therethrough as it is. Since incident light from the first display face A is returned to the first display face A in such a manner, white display condition can be obtained by the reflection-type liquid crystal display. Since the linearly polarized light component of incident light is reflected by 100 % theoretically by the lower optical filter 2B, very bright white color can be obtained.

On the other hand, at the portion of the liquid crystal cell 3 where a voltage is applied, the linearly polarized light component of incident light which is passed through the upper absorption-type polarizing film 1A and the upper optical filter 2A is emitted as it is without being optically rotated through 90 degrees as it is and falls on the lower optical filter 2B. At this time, since the vibration direction of the linearly polarized light of incident light is parallel with the transmittable axis 2a of the lower optical filter 2B, the linearly polarized light is transmitted through the lower optical filter 2B as it is, and falls on the lower absorption-type polarizing film 1B. Since the vibration direction of the linearly polarized light of incident light is also parallel with transmittable axis 1a of the lower absorption-type polarizing film 1B, the linearly polarized light is also transmitted through the lower absorption-type polarizing film 1B and is emitted toward the second display face B side. However, there is no member to reflect light on the outside (back face) of the second display face B, the emitted light is not returned to the first display face A side. Accordingly, a black display condition can be obtained.

In such a manner, a black-and-white display in good contrast (good visibility) can be obtained.

When viewing from the second display face B side, since the liquid crystal display panel 5 has a vertically symmetrical structure while sandwiching the liquid crystal cell 3, the incident direction of light becomes opposite to that in the case where viewing from the first display face A side, and hence as the incident light operates in the same manner as the case where viewing from the first display face A side.

That is, the linearly polarized light component of incident light which falls on from the second display face B side, and vibrates in the direction parallel with transmittable axis 1a of the lower absorption-type polarizing film 1B and transmittable axis 2a of the lower optical filter 2B, is transmitted through the lower absorption-type polarizing film 1B and the lower optical filter 2B, and reaches the liquid crystal cell 3.

At the portion of the liquid crystal cell 3 where no voltage is applied, since the vibration direction of the linearly polarized light component crosses the transmittable axis 2a at right angles when the linearly polarized light component of the incident light is optically rotated through 90 degrees inside the liquid crystal cell 3 and is emitted from the liquid crystal cell 3 and falls on the upper optical filter 2A, the linearly polarized light component is reflected by the upper optical filter 2A, and it is returned to the second display face B side. Since the reflected linearly polarized light is again optically rotated through 90 degrees when it is passed through the inside of the liquid crystal cell 3, it is transmitted through the lower optical filter 2B and the lower absorption-type polarizing film 1B as it is.

In such a manner, since the linearly polarized light component of the incident light is returned to the second display face B side as it is, a white display condition can be obtained by the reflection-type liquid crystal display.

At the portion of the liquid crystal cell 3 where a voltage is applied to the liquid crystal cell 3, since the linearly polarized light component of incident light which is passed through the lower absorption-type polarizing film 1B and the lower optical filter 2B is not optically rotated through 90 degrees when passing through the liquid crystal cell 3, it is transmitted through the upper optical filter 2A and the upper absorption-type polarizing film 1A as it is, and is emitted toward the first display face A side. The emitted light is not returned to the second display face B side, and hence a black display condition can be obtained.

In such a manner, black-and-white display in good contrast (good visibility) conditions can be obtained.

As set forth above, the liquid crystal display panel 5 of the first embodiment can control the reflection and transmission of incident light by switching between the application or non-application of voltage to the liquid crystal cell 3. Further, since the liquid crystal display panel 5 can operate in the same manner for incident light from the first display face A side and that from the second display face B side, the reflection and transmission of incident light can be controlled when viewing from both the first display face A side and second display face B side. Accordingly, it is possible to effect black-and-white display in good visibility on both the first display face A side and second display face B side.

Since the absorption-type polarizing films 1A, 1B are disposed outside the optical filters 2A, 2B on both sides of the liquid crystal cell 3 while the transmittable axis 2a of the upper optical filter 2A and the transmittable axis 1a of the upper absorption-type polarizing film 1A are substantially parallel with each other, the linearly polarized light component which is reflected, when the incident light from the first display face A or the second display face B falls on the upper optical filter 2A or lower optical filter 2B, is rendered to fall on the upper optical filter 2A or lower optical filter 2B by cutting the linearly polarized light component by the upper absorption-type polarizing film 1A or the lower absorption-type polarizing film 1B. Accordingly, light which is returned to the visible side upon falling on from the visible side and light which fell on and emitted from a side opposite to the visible side are clearly differentiated from each other, thereby obtaining display in high contrast. Further, even if there is no backlight, a sufficient reflected light is obtained, so that the liquid crystal display panel of the invention can obtain a display performance on both faces like the conventional reflection-type liquid crystal display panel having one sided display.

Although the TN liquid crystal having a twist angle of 90 degrees is used as the liquid crystal layer to be sealed in the liquid crystal cell 3 according to the first embodiment, an STN (supertwisted nematic) liquid crystal having a twist angle of 180 degrees to 270 degrees may be used instead thereof. Although an embodiment using the STN liquid crystal will be described in detail later, the use of the STN liquid crystal is effective when obtaining high contrast display with a high division single matrix driving. If the TN liquid crystal is used as set forth above, it is advantageous in case of low division, in view of cost for fabrication thereof and constituent members thereof, and it is also advantageous in view of obtaining display in contrast which is practically sufficient in the range of from half division to 1/16 division.

Although with the illustrated liquid crystal display panel 5, the transmittable axis 1a of the upper absorption-type polarizing film 1A and the transmittable axis 2a of the upper optical filter 2A and the transmittable axis 1b of the lower absorption-type polarizing film 1B and the transmittable axis 2a of the lower optical filter 2B are respectively disposed in parallel with each other while sandwiching the liquid crystal cell 3 therebetween, they may be disposed so as to cross each other at right angles. With such a disposition, although a display obtained by applying a voltage and a display obtained by applying no voltage are inverted to each other compared with a case where the respective transmittable axes are disposed in parallel with each other, display in high contrast can be obtained in the same manner as the case where the respective transmittable axes are disposed in parallel.

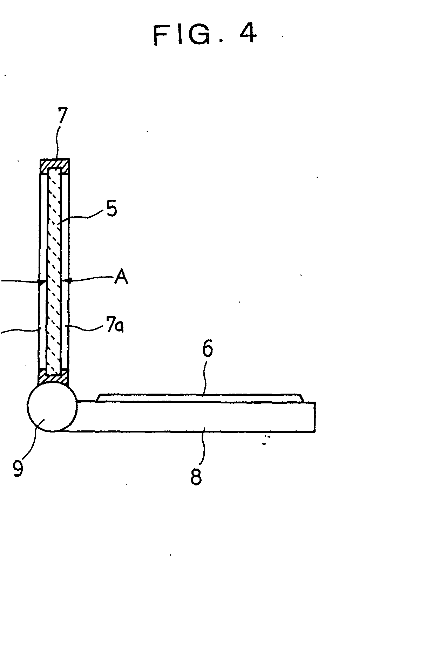

### First Embodiment of Electronic Apparatus: Fig. 4 to Fig. 6

A first embodiment of an electronic apparatus is described next with reference to Fig. 4 to Fig. 6.

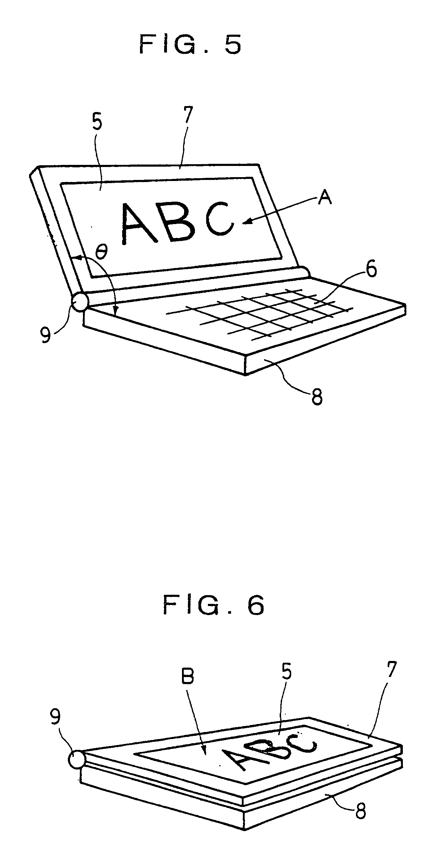

Fig. 4 is a side view of the first embodiment of an electronic apparatus according to the invention wherein only a liquid crystal display panel is shown by a sectional view. Fig. 5 and Fig. 6 are schematic perspective views showing respectively an open state and a close state of the liquid crystal display panel of the electronic apparatus.

The electronic apparatus comprises, as shown in Fig. 4, a display panel frame 7 for holding a liquid crystal display panel 5, and an apparatus body 8 provided with a keyboard 6 on the upper surface thereof serving as an operation function portion and a shaft 9 for connecting both the display panel frame 7 and apparatus body 8 so as to freely turn both the display panel frame 7 and apparatus body 8. The turning range of the shaft 9 is set so that the electronic apparatus is operable in the range from a twice-folded state where the liquid crystal display unit 5A is closed to at least not more than 90 degrees.

The display panel frame 7 holds the liquid crystal display panel 5 so as to reinforce the liquid crystal display panel 5 as explained with reference to Fig. 1 to Fig. 3 and has braking windows 7a, 7b which are defined while aligning with a display region on both faces thereof so as to view the first display face A and second display face B of the liquid crystal display panel 5.

It is assumed that the apparatus body 8 including the keyboard 6 is an apparatus body of a personal computer (a so-called notebook computer) serving as notebook information instrument which builds therein circuits or a memory for realizing desired function such as information display function, text edit function, spreadsheet function and the like by operating the keyboard 6 for inputting data.

In Fig. 5, the display panel frame 7 is held in a state where the display panel frame 7 is opened by an angle θ (about 130°) from the apparatus body 8 operating the shaft 9 as a central turning axis thereof. At this time, a user of the electronic apparatus can view the first display face A of the liquid crystal display panel 5. In this state, the user can input data by operating the keyboard 6 while viewing the display of the liquid crystal display panel 5.

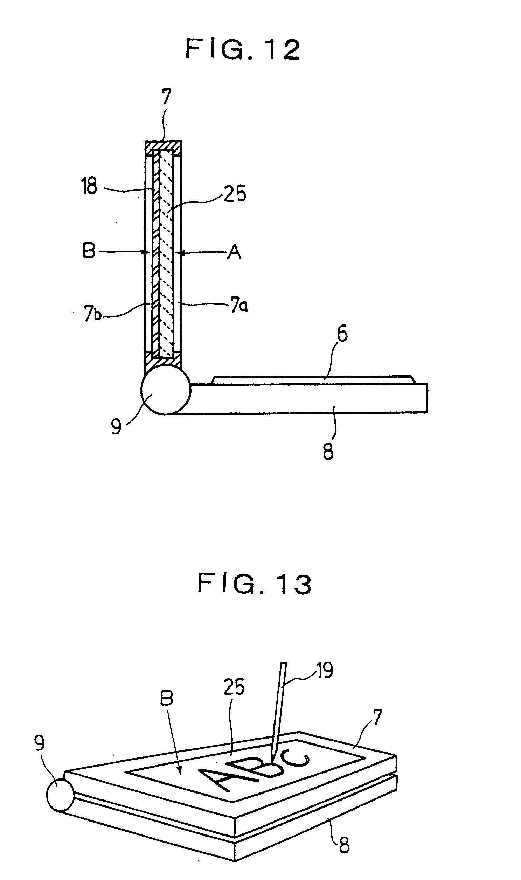

At this time, a person who is positioned behind the liquid crystal display panel 5 so as to face the user can view the second display face B of the liquid crystal display panel 5. Accordingly, the electronic apparatus is very convenient when the user can give an explanation or make a presentation while displaying necessary information and the like. In such a case, if the display panel frame 7 is kept in upright, i.e., substantially perpendicular to the apparatus body 8 as shown in Fig. 12, the second display face B of the liquid crystal display panel 5 can be easily viewed.

Even in a state where the electronic apparatus is twice-folded, namely, the apparatus body 8 is covered with the display panel frame 7, the user can view the second display face B of the liquid crystal display panel 5 serving as the upper surface of the electronic apparatus. Further, this state is a compact state which is excellent in portability in a case where the operation of the keyboard 6 is not needed.

The displaying operation of the first display face A and the second display face B of the liquid crystal display panel 5 is omitted to explain because it is the same as that set forth previously.

According to the electronic apparatus of the first embodiment, a state where the liquid crystal display panel 5 is opened, the first display face A (or also second display face B) can be viewed while in a close state, the second display face B can be viewed. That is, the liquid crystal display panel 5 can effect a dual-sided display. Still further, the display is in high contrast and can be easily viewed, and the performance of the dual-sided display is substantially the same so that the display can be viewed more easily by a user. More still further, since even if in a state where the liquid crystal display panel 5 is closed, display in high contrast can be obtained without needing a backlight, power consumption more than necessary is not required. Yet, since even if the liquid crystal display panel 5 is not opened, the display can be viewed, and hence convenience when viewing the display is excellent. Further, since the liquid crystal display panel 5 is provided with the keyboard 6, operability thereof when inputting characters is excellent.

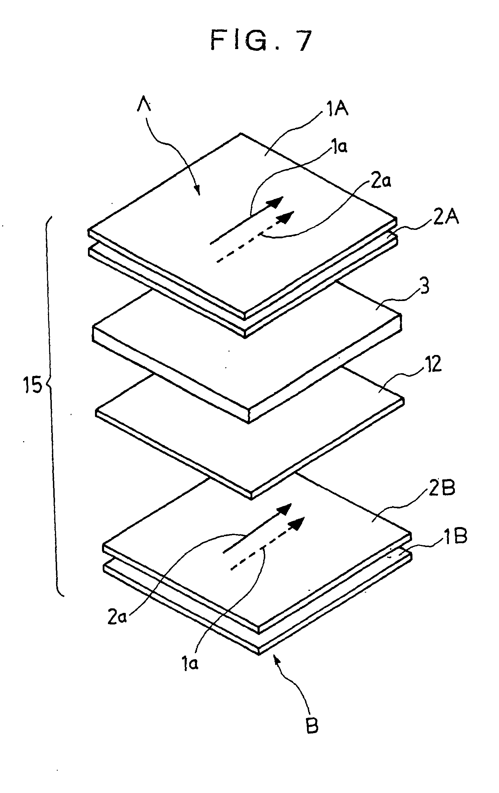

### Second Embodiment of Liquid Crystal Display Panel: Fig. 7

A second embodiment of a liquid crystal display panel of the invention is described next with reference to Fig. 7. Fig. 7 is an exploded perspective view of the liquid crystal display panel like the liquid crystal display panel in Fig. 1, wherein constituent members which are the same as those in Fig. 1 are depicted by the same reference numerals.

A liquid crystal display panel 15 shown in Fig. 7 is different from the liquid crystal display panel of the first embodiment as explained with reference to Fig. 1 in respect of only the disposition of a light scattering member 12 between a liquid crystal cell 3 and a lower optical filter 2B. The other construction of the liquid crystal display panel 15 is the same as that of the liquid crystal display panel 5 in Fig. 1. Accordingly, described mainly next is the different point while explanation of the common constituent members are omitted or simplified.

For the light scattering member 12, there are employed a transparent base film a surface of which is ravaged or a base film onto which a mixture of an adhesive having different refraction and silica beads is applied. For example, the silica beads and an adhesive respectively having different refraction are mixed with each other, and the mixture is applied onto the upper surface of the lower optical filter 2B, thereby obtaining a film which forms the light scattering member 12. In such a manner, the film serving as the light scattering member 12 serves also as an adhesive to bond between the liquid crystal cell 3 and the lower optical filter 2B.

In the liquid crystal display panel 15 shown in Fig. 7, the light scattering member 12 is disposed between the liquid crystal cell 3 and the lower optical filter 2B but it may be disposed between the liquid crystal cell 3 and the upper optical filter 2A. Alternatively, the light scattering member 12 may be disposed on both sides of the liquid crystal cell 3 as well as on one side of the liquid crystal cell 3.

The light scattering member 12 operates as follows. The case of viewing from the first display face A side.

At the portion of the liquid crystal cell 3 where no voltage is applied, the linearly polarized light component of incident light from the first display face A is passed through the liquid crystal cell 3 and is optically rotated through 90 degrees, then it falls on the light scattering member 12. Although the linearly polarized light component which is scattered on the light scattering member 12 falls on the lower optical filter 2B disposed under the light scattering member 12, it is reflected by the lower optical filter 2B because the vibration direction thereof crosses a transmittable axis 2a of the lower optical filter 2B at right angles. The reflected light is also scattered by the light scattering member 12, then it is returned to the first display face A. At this time, since the reflected light to be returned to the first display face A is scattered moderately, a white display which is not dependent on an incident angle of incident light can be obtained.

Although at the portion of the liquid crystal cell 3 where a voltage is applied, the linearly polarized light component which is transmitted through the light scattering member 12 is transmitted through the lower optical filter 2B and the lower absorption-type polarizing film 1B respectively disposed under light scattering member 12, and is emitted toward the second display face B side, so that a black display is obtained at the first display face A side because there is nothing to reflect light outside the second display face B.

Even in the case of viewing from the second display face B side, the same operation is effected.

Since the reflected light can be scattered moderately by disposing the light scattering member 12 as set forth above, the range of selection of reflective property of the optical filters 2A, 2B can be diverged.

For example, in the case of using the optical filters 2A, 2B made of a material having reflection property close to a mirror surface, specular reflection is effected if the light scattering member 12 is not present, thereby forming a display as if a mirror were used as a reflector. Meanwhile, when the light scattering member 12 is inserted between the liquid crystal cell 3 and either the optical filters 2A or 2B, incident light and reflected light can be scattered moderately so that scattered emitted light is obtained, thereby obtaining a white display which is uniform and not dependent on the incident angle of incident light at the visible side.

It is possible to use "DBEF" (trade name) manufactured by Sumitomo 3M Co, Ltd. on a market for the optical filters 2A, 2B. Since the reflection surface of this product is smooth and has specular reflection property, it is preferable to obtain a uniform white display by scattering incident light moderately while inserting the light scattering member.

"RDF-C" (trade name) manufactured by Sumitomo 3M, Co., Ltd. has a structure in which an adhesive serving as the light scattering, member is applied onto DBEF (trade name) and it can be used as the optical filter and light scattering member. In this case, both the functions of the optical filter 2 and the light scattering member 12 can be realized, thereby simplifying the construction.

According to an experiment made by the present inventors, "RDF-C" (trade name) exhibits excellent polarizing light property in a wider incident angle, thereby obtaining an excellent display in a wider viewing angle.

It is possible to use a reflection-type polarizing film for the optical filters 2A, 2B which film has a property to transmit the linearly polarized light which vibrates in a direction parallel with the transmittable axis 2a but reflects linearly polarized light which vibrates in a direction crossing the transmittable axis 2a at right angles.

For example, the "DBEF" manufactured by the Sumitomo 3M is a kind of the reflection-type polarizing film and is used for improving brightness of a backlight, but it can satisfactorily function as the reflection-type polarizing film according to the experiment by the present inventors.

Further, the "RDF-C" obtained by applying an adhesive having light scattering member mixed therein onto the "DBEF" is also a reflection-type polarizing film provided with a light scattering layer.

There is a reflection-type polarizing film, other than the "RDF-C", a grid-type light polarizer or a base film having a structure wherein thin films are formed in plural layers.

Further, the following member may be used for optical filters 2A, 2B. That is, a sheet member sandwiching a separating sheet for circularly polarized light by a quarter wavelength film which transmits a part of linearly polarized light and reflects the other part of the linearly polarized light which is differentiated in a vibration direction by 90 degrees.

It is known that the separating sheet for circularly polarized light has a property to reflect a part of a circularly polarized light component of incident light and to transmit the other part of the circularly polarized light component, and is made of cholesteric liquid crystal which is spirally disposed and fixed by polymer. For example, the separating sheet for circularly polarized light has a property to transmit a left circularly polarized light component when reflecting a right circularly polarized light component. A spiral state of the cholesteric liquid crystal determines the reflection of the left circularly polarized light component or the right circularly polarized light component. Further, the selective reflection of the circularly polarized light owing to the cholesteric liquid crystal generally exhibits a selective reflection property of a short wavelength. This is caused by the fact that a wavelength of reflected light is determined by spiral pitches of molecules.

A separating sheet for circularly polarized light which is not dependent on a wavelength is recently realized by superposing layers having several pitches on another or by varying continuously pitches between molecules. By such a separating sheet for circularly polarized light, the reflected light exhibits a white color. Further, a fresh colored background can be obtained by using a separating sheet for circularly polarized light having a selective reflection property of short wavelength if a background is intended to be colored up.

Since this separating sheet for circularly polarized light reflects one part of right-circularly polarized light component and left-circularly polarized light of incident light while transmits the other part thereof, the linearly polarized light component has to be converted into the circularly polarized light component when it is used for the optical filters 2A, 2B. Accordingly, quarter wavelength films are disposed on both sides of the separating sheet for circularly polarized light to structure the upper optical filter 2A or lower optical filter 2B. As a result, the linearly polarized light component falling on the upper optical filter 2A or lower optical filter 2B is converted into the circularly polarized light component when it is passed through the quarter wavelength film disposed on one side of the separating sheet for circularly polarized light, and it is reflected by or transmitted through the separating sheet for circularly polarized light. When the linearly polarized light component is transmitted through the separating sheet for circularly polarized light, it is converted into the linearly polarized light component by the quarter wavelength film disposed on the other side of the separating sheet for circularly polarized light, thereafter it is emitted therefrom. In such a manner, it is possible to structure optical filters each having a function equivalent to the reflection-type polarizing film by holding the separating sheet for circularly polarized light by the quarter wavelength films.

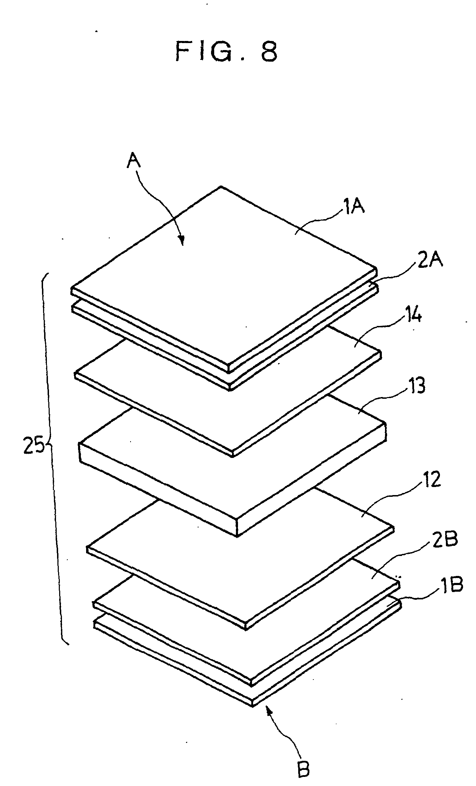

### Third Embodiment of Liquid Crystal Display Panel: Fig. 8 to Fig. 11

A third embodiment of a liquid crystal display panel according to the invention is described next with reference Fig. 8 to Fig. 11.

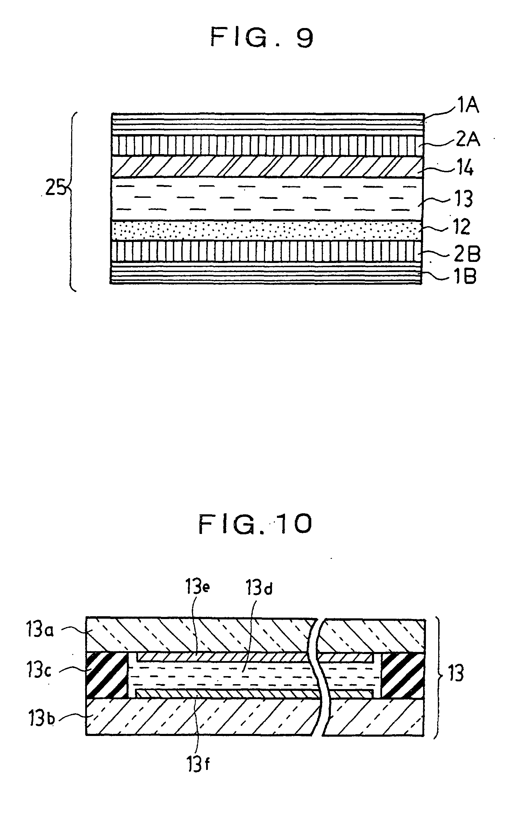

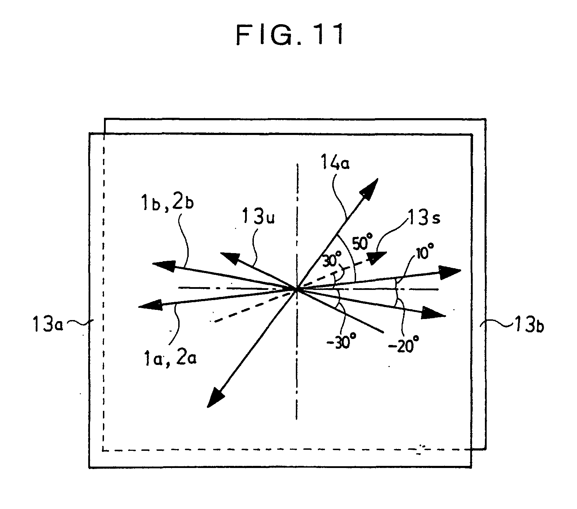

Fig. 8 is an exploded perspective view showing the construction of the third embodiment of the liquid crystal display panel according to the invention, Fig. 9 is a schematic sectional view of the liquid crystal display panel, and Fig. 10 is a schematic enlarged sectional view showing the construction of an STN liquid crystal cell. Further, Fig. 11 is a view showing a planar configuration among respective constituent members of the liquid crystal display panel of the third embodiment.

A liquid crystal display panel 25 of the third embodiment shown in Fig. 8 and Fig. 9 is different from the liquid crystal display panel 15 of the second embodiment in respect of a liquid crystal cell formed of an STN liquid crystal cell 13 and a disposition of a retardation film 14 between the STN liquid crystal cell 13 and an upper optical filter 2A.

As shown in Fig. 10, the liquid crystal cell 13 is formed by bonding a pair of substrates 13a, 13b each made of a transparent insulating member such as glass and the like having a thickness of about 0.7 mm while providing a seal member 13c therearound, and holding a liquid crystal layer 13d which is sealed in a gap between the substrates 13a, 13b.

Transparent electrodes 13e, 13f each made of indium tin oxide (ITO) are formed on respective opposite inner surfaces of the pair of substrates 13a, 13b, and orientation films, not shown, are formed on the inner surfaces of the substrates 13a, 13b and the surfaces of the transparent electrodes 13e, 13f, thereby forming an STN liquid crystal layer wherein a liquid crystal layer 15d is twist oriented counterclockwise by 240 degrees by subjecting them to an orientation treatment.

When the substrate 13a and the transparent electrode 13e are subjected to a rubbing treatment applied in a direction oriented upwards the left at -30° relative to the horizontal axial direction (- signifies an angle of clockwise rotation), an alignment direction 13u of liquid crystal molecules in the upper part of the liquid crystal layer, on the side of the substrate 13a, is oriented in a direction rising toward the left at -30° as shown in Fig. 11. When the substrate 13b and the transparent electrode 13f are subjected to a rubbing treatment applied in a direction oriented upwards the right at 30° relative to the horizontal axial direction (+ signifies an angle of counterclockwise rotation), an alignment direction 13s of liquid crystal molecules in the lower part of the liquid crystal layer, on the side of the substrate 13b, is oriented in a direction rising toward the right at 30°.

In such a manner, the STN liquid crystal layer which is twist orientated counterclockwise by 240 degrees is formed. A nematic liquid crystal used by the liquid crystal layer 13d has a birefringence difference Δn of 0.148, while a cell gap d serving as a gap between the substrate 13a and substrate 13b is 5.45µm. Accordingly, a Δnd value of the liquid crystal layer 13d represented by the product of the birefringence difference Δn of the nematic liquid crystal and the cell gap d becomes 807 nm.

Then, the retardation film 14 is disposed on the side of the substrate 13a of the STN liquid crystal cell 13 such that a phase delay axis 14a of the retardation film 14 is oriented at 50° on the basis of a horizontal axis. The upper optical filter 2A is disposed outside the retardation film 14 such that the transmittable axis 2a of the upper optical filter 2A is oriented at 10° on the basis of the horizontal axis, and further the upper absorption-type polarizing film 1A is disposed outside the upper optical filter 2A such that a transmittable axis 1a of the upper absorption-type polarizing film 1A is oriented at 10° on the basis of the horizontal axis.

Further, the retardation film 14, the upper optical filter 2A and the upper absorption-type polarizing film 1A are respectively bonded to each other by an acryl based adhesive.

A light scattering member 12 is disposed on the side of the substrate 13b of the STN liquid crystal cell 13, and a lower optical filter 2B is disposed outside the light scattering member 12 such that a transmittable axis 2b of the lower optical filter 2B is oriented at -20° on the basis of the horizontal axis, and also the lower absorption-type polarizing film 1B is disposed outside the lower optical filter 2B such that a transmittable axis 1b of the lower absorption-type polarizing film 1B is oriented at -20° on the basis of the horizontal axis.

The lower optical filter 2B is bonded to the STN liquid crystal cell 13 by the light scattering member 12 serving as an adhesive while the lower absorption-type polarizing film 1B is bonded to the lower optical filter 2B using an acryl based adhesive.

The retardation film 14 has a retardation value of 580 nm. The retardation film 14 uses a dual axial retardation film so as to improve a viewing angle property and establishing a formula of nx > nz > ny, where nx is a refractive index in a direction of a phase delay axis, ny is a refractive index in a direction of Y axis, nz is a refractive index in a direction of thickness, but it may be formed of a monoaxial retardation film.

The operation of the liquid crystal display panel 25 is described next in detail in the case of viewing from the first display face A side and in the case of viewing from the second display face B side.

When viewing from the first display face A side, at the portion of the STN liquid crystal cell 13 where no voltage is applied, the linearly polarized light component of incident light from the first display face A side which vibrates in a direction crossing a transmittable axis 1a at right angles is absorbed by the upper absorption-type polarizing film 1A, while the linearly polarized light component which vibrates in a direction parallel with the transmittable axis 1a is transmitted and falls on the upper optical filter 2A. Since the linearly polarized light which thus fell on the upper optical filter 2A is parallel with a transmittable axis 2a of the upper optical filter 2A, and hence it is transmitted through the upper optical filter 2A, and also transmitted through the retardation film 14, then falls on the STN liquid crystal cell 13.

If there is no retardation film 14, light which is transmitted through the STN liquid crystal cell 13 becomes in an elliptically polarized light condition, and hence it is not completely reflected by the lower optical filter 2B, and it is colored up owing to birefringent tendency, thereby rendering a display insufficient. However, according to this liquid crystal display panel 25, the retardation film 14 is disposed between the upper optical filter 2A and the STN liquid crystal cell 13, so that the following clear display can be obtained.

The linearly polarized light emitted from the upper optical filter 2A falls on the retardation film 14 and becomes in an elliptically polarized light state, then falls on the STN liquid crystal cell 13. The electrically polarized light is corrected as it is transmitted through the STN liquid crystal cell 13, and is changed to a substantially linearly polarized light, then it is rotated through about 60° relative to the transmittable axis 2a of the upper optical filter 2A, then it is emitted when a vibration direction thereof becomes about 70° relative to the horizontal axis. The thus emitted linearly polarized light component is scattered moderately by the light scattering member 12 and falls on the lower optical filter 2B.

Since the transmittable axis 2b of the lower optical filter 2B is disposed in a direction of -20° on the basis of the horizontal axis, the linearly polarized light which falls on the lower optical filter 2B vibrates in a direction crossing the transmittable axis 2b of the lower optical filter 2B at right angles so that it is reflected by the lower optical filter 2B, and is returned to the first display face A side. When the reflected light is returned to the first display face A side, it is passed again through the light scattering member 12 so that the linearly polarized light which is scattered moderately is emitted from the first display face A side, and hence it is viewed as white display.

On the other hand, at the portion of the STN liquid crystal cell 13 where a voltage is applied, nematic liquid crystal molecules uprise so that birefringent property of the STN liquid crystal cell 13 is changed. Accordingly, the linearly polarized light emitted through the STN liquid crystal cell 13 is optically rotated through about 90 degrees in its vibration direction, and it is emitted in a direction at -20° relative to the horizontal axis. Since the vibration direction of this linearly polarized light is parallel with the transmittable axis 2b of the lower optical filter 2B and the transmittable axis 1b of the lower absorption-type polarizing film 1B, the linearly polarized light is transmitted through the lower optical filter 2B and the lower absorption-type polarizing film 1B as it is, and is emitted toward the second display face B side.

Since there is no member for reflecting the transmitted linearly polarized light component outside the second display face B side, the transmitted linearly polarized light component is not reflected and is not returned to the first display face A side. Accordingly, a black display is obtained on the first display face A side.

Since the liquid crystal display panel 25 has the retardation film 14 disposed between the upper optical filter 2A and the STN liquid crystal cell 13, clear black-and-white display in high contrast can be obtained.

Meanwhile, when viewing from the second display face B side, compared with a case when viewing from the first display face A side, the disposition of the light scattering member 12 and the retardation film 14 when viewing from the upper absorption-type polarizing film 1A are different from that when viewing from the lower absorption-type polarizing film 1B so that there is only difference in the order of the pass of incident light through these constituent members, but the display operation is completely the same, and hence explanation thereof is omitted.

As mentioned above, the black-and-white display condition can be obtained by applying a voltage and no voltage to the STN liquid crystal cell 13, and also clear black-and-white display in high contrast can be obtained even when viewing from both the first display face A side and the second display face B side.

Further, since the liquid crystal cell is formed of the STN liquid crystal cell 15, the deformation of nematic liquid crystal molecules relative to the applied voltage becomes sharp, thereby rendering a sharpness of optical property excellent. Accordingly, even with a simple matrix driving system, the number of scanning lines can be increased up to 100 to 400 lines, thereby providing a large sized liquid crystal display panel or high density liquid crystal display panel. Further, a viewing angle property is also improved.

### Second Embodiment of Electronic Apparatus: Fig. 12 and Fig. 13

A second embodiment of an electronic apparatus of the invention is described next with reference to Fig. 12 and Fig. 13.

Fig. 12 is a side view of the electronic apparatus wherein only a liquid crystal display panel is shown by a sectional view, and Fig. 13 is a schematic perspective view showing an example of use of the electronic apparatus.

The electronic apparatus of the second embodiment is different from the electronic apparatus of the first embodiment shown in Fig. 4 in respect of the provision of the liquid crystal display panel 25 of the third embodiment and a transparent pen tablet 18 provided on a second display face B side, and the other constituent members are the same as those of the electronic apparatus of the first embodiments. Accordingly, described hereinafter is mainly the different point, and the explanation of the common constituent members is omitted or simplified.

The pen tablet 18 is bonded and fixed to the peripheral portion of a display panel frame 7 by a double-sided tape, and a gap defined between the pen tablet 18 and the liquid crystal display panel 25 is about 1.0 mm.

The pen tablet 18 employs a resistance film system. The resistance film system is a system for forming transparent electrodes on two pieces of transparent substrates, and a partition ratio of the resistance on both the transparent electrodes is detected by an A/D converter when they are pressed by a pen, thereby obtaining coordinates at the pressed portion of the transparent electrodes. There are advantages in this resistance film system that an exclusive pen is not needed because such a pen used for inputting data is not needed to be devised, it is high accurate when a screen size is small, and is low in power consumption and manufacturing cost thereof. This resistance film system is employed by most of pen tablets provided in small-sized electronic apparatus.

According to the second embodiment, since the pen tablet 18 is installed on the second display face B side of the liquid crystal display panel 25, it is possible to effect inputting operation by the pen tablet 18 even in a state where a keyboard 6 can not be used when the display panel unit is twice-folded while the display panel frame 7 is closed relative to the apparatus body 8 side.

For example, when referring to an address list stored inside the apparatus body 8 at a place where a user has gone, an inputting operation can be easily effected using a pen 19 without opening the display panel frame 7 as shown in Fig. 13 whereby a display of retrieved information can be viewed on the second display face B, and hence the electronic apparatus of the second embodiment is excellent in operability and convenience for viewing the displayed information. When inputting characters and the like, the display panel frame 7 is opened and an inputting operation using the keyboard 6 can be effected, and hence the electronic apparatus of the second embodiment has a convenience in operating function. Further, even when memo writing is effected in a narrow space, such a memo writing can be instantly effected by the use of the electronic apparatus of the second embodiment shown in Fig. 13.

Even if the pen tablet 18 is installed on the liquid crystal display panel 25, incident light or emitted light from the second display face B side is passed through the pen tablet 18 practically without loss, and hence the dual-sided display performance of the liquid crystal display panel 25 is scarcely affected except that a background of a display on the second display face B side becomes dark about 10 %.

Since the pen tablet 18 is installed on the liquid crystal display panel 25, there is a great advantage that a functional operability is improved although an operating principle of a basic dual-sided display is not changed.

The liquid crystal display panel 5 of the first embodiment or the liquid crystal display panel 15 of the second embodiment may be employed as the liquid crystal display panel of the electronic apparatus.

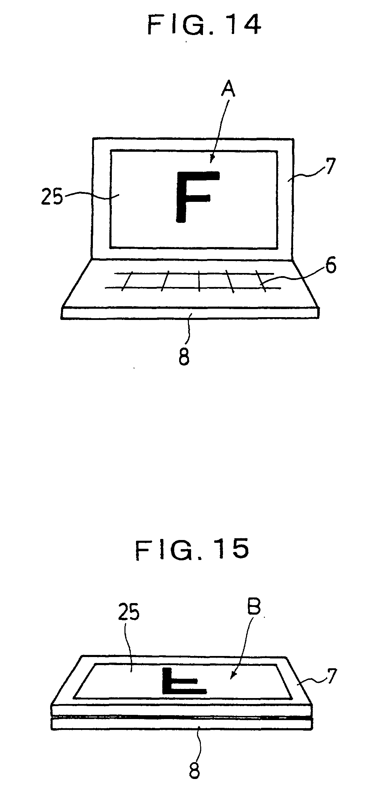

### Third Embodiment of Electronic Apparatus: Fig. 14 to Fig. 22

A third embodiment of an electronic apparatus according to the invention is described next with reference to Fig. 14 to Fig. 22.

The third embodiment is intended not to change the direction of the display as viewed from a user in both cases where a display panel frame 7 of the electronic apparatus is opened and closed.

As shown in Fig. 14, assuming that in a state where the display panel frame 7 is opened, e.g. a character "F" is displayed on a first display face A of a liquid crystal display panel 25. In this case, the user is positioned at the near side of the electronic apparatus where the user can operate a keyboard 6 and can view the first display face A of the liquid crystal display panel 25 from the operating side and hence the character "F" can be viewed as an erect image.

When the display panel frame 7 having a second display face B of the liquid crystal display panel 25 on which the character "F" is displayed is brought down toward the keyboard 6 so as to be closed in a twice-folded state relative to the keyboard 6, the electronic apparatus becomes in a state as illustrated in Fig. 15. In this case, the user view the second display face B of the liquid crystal display panel 25 from the above thereof, and hence the displayed character "F" is turned upside down.

In the third embodiment, the display is turned upside down by switching the scanning direction of the liquid crystal display panel 25 so as to solve such an inconvenience.

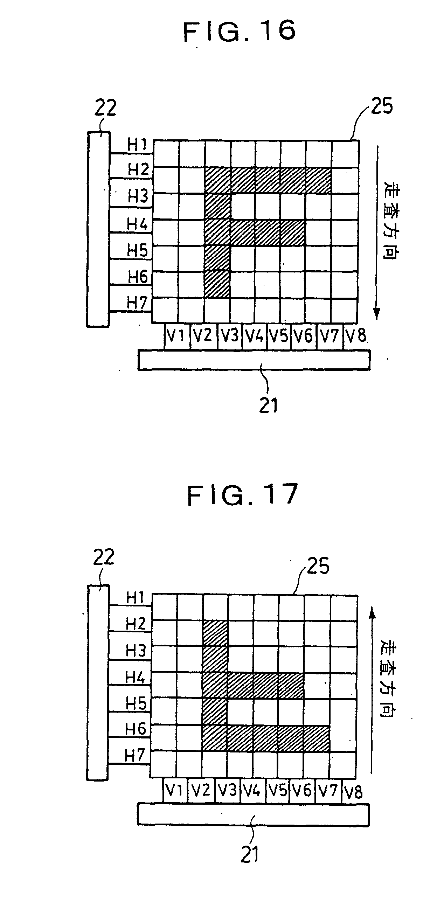

Fig. 16 and Fig. 17 are views explaining a relation a scanning direction to a display direction of the liquid crystal display panel 25.

In these figures, depicted by 21 is a signal driving IC, and output terminals V1 to V8 thereof are connected respectively to eight signal electrodes formed on a substrate of the liquid crystal display panel 25. Depicted 22 is a scan driving IC, and output terminals H1 to H7 thereof are connected respectively to seven scanning electrodes formed on the substrate of the liquid crystal display panel 25.

As shown in Fig. 16, when the scan driving IC 22 outputs signals sequentially from the output terminals H1 to H7 to scan the liquid crystal display panel 25, an erect image of the character "F" is displayed. On the other hand, as shown in Fig. 17, when the scan driving IC 22 outputs signals sequentially from the output terminals H7 to H1 to scan the liquid crystal display panel 25, an image of the character "F" which is turned upside down is displayed.

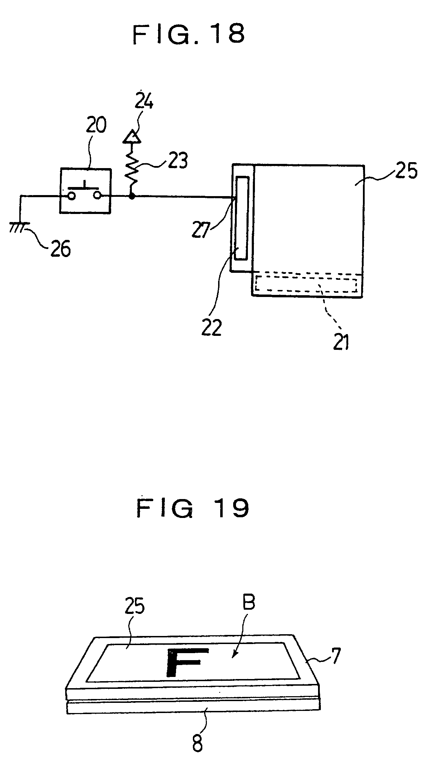

Fig. 18 is a circuit diagram showing an example of an vertically inverting circuit provided inside the apparatus body 8 shown in Fig. 14.

According to the vertically inverting circuit, a vertically switching terminal 27 is provided on the scan driving IC 22 for scanning the liquid crystal display panel 25, and the vertically switching terminal 27 is connected to an H logic power supply (positive voltage power supply) 24 via a pull-up resistor 23, and also connected to an L logic power supply (earth) 26 via an open/close detection switch 20.

The open/close detection switch 20 is open/close detection means for detecting open/close states of the liquid crystal display panel 25, and it is turned off when both the display panel frame 7 and the liquid crystal display panel 25 are opened while it is tuned on when detecting an close state thereof.

The vertically switching terminal 27 of the scan driving IC 22 is at high level by the H logic power supply 24 via the pull-up resistor 23 when the open/close detection switch 20 is turned off while it is connected to the L logic power supply 26 and becomes at low level when the liquid crystal display panel 25 is closed and the open/close detection switch 20 is turned on.

The vertically switching terminal 27 is a logic input terminal of the scan driving IC 22 and it has a function for switching a scanning direction of an electrode driving voltage outputted from an output terminal of the scan driving IC 22 by an H/L (high level/low level) of the logic level of the logic input terminal.

The scan driving IC 22 outputs signals sequentially from the output terminal H1 to H7 as shown in Fig. 16 when the vertically switching terminal 27 is at high level to display an erect image while scanning the liquid crystal display panel 25 in the direction from the upper portion to the lower portion in Fig. 16.

On the other hand, the scan driving IC 22 outputs signals sequentially from the output terminal H7 to H1 as shown in Fig. 17 when the vertically switching terminal 27 is at low level to display an image which is turned upside down while scanning the liquid crystal display panel 25 in the direction from the lower portion to the upper portion in Fig. 17.

The scan driving IC of the liquid crystal display unit generally has a shift register structure, and exhibits a switching function of scanning direction by switching an input of scanning start data to a head of a shift register or to an end thereof.

Accordingly, with the electronic apparatus of the third embodiment, when the display panel frame 7 and the liquid crystal display panel 25 are opened as shown in Fig. 14, an erect image is displayed on the first display face A, while when the liquid crystal display panel 25 is closed as shown in Fig. 19, an image which is turned upside down is displayed on the second display face B. Since a user view the second display face B vertically inverted from the near side, the user can view the image as an erect image.

According to the third embodiment, the liquid crystal display panel 25 has 7 scanning electrodes and 8 signal electrodes for simplifying an explanation but the scanning electrodes and the signal electrodes are not limited to the number set forth above, but they may be formed of any number. For example, even if the liquid crystal display panel 25 has 240 scanning electrodes, the same effect can be obtained.

Further, according to the third embodiment, the scanning direction is inverted because a user can view an erect image on the dual-sided display when it is vertically inverted, the transfer of data signal by the signal driving IC 21 is inverted horizontally in the case where an erect image is not obtained unless it is inverted horizontally depending on a viewing direction.

Since the signal driving IC has normally a function for selecting a horizontal transfer direction by a logic power supply, the horizontally inverted transfer can be effected without any problem. Further, a display of the combination of vertical and horizontal inversion can be effected, and hence an erect image can be displayed so as to be viewed from any direction.

Still further, according to the third embodiment, although a displayed image is inverted by inverting the scanning direction of the driving IC, an image per se to be displayed may be displayed on the liquid crystal display panel while it is inverted without inverting the scanning direction. However, it is necessary to form image data which is inverted by the apparatus body to obtain such a display, thereby imposing burden on a CPU and the like of the electronic apparatus, and hence the third embodiment is advantageous because no burden is imposed on the CPU and the like.

According to the third embodiment, there is provided the open/close detection switch 20 serving as open/close detection means for vertically inverting a displayed image when viewing the first display face A in a state where the liquid crystal display panel 25 is opened and when viewing the second display face B in a state where the liquid crystal display panel 25 is closed, wherein the scanning direction of the scan driving IC 22 is inverted in response to an open/close state detection signal.

A concrete example of the open/close detection means is described next.

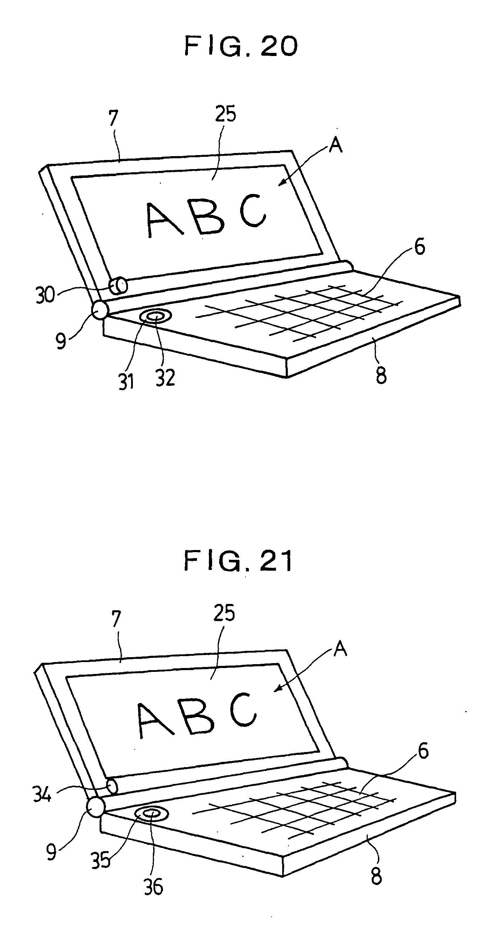

Fig. 20 shows an example of the open/close detection means. There are provided in the electronic apparatus as shown in Fig. 20, a protrusion 30 on thelower portion of the first display face A side of the display panel frame 7 which is integrated with the liquid crystal display panel 25, and a protrusion receiver 31 on the upper surface of the apparatus body 8 while facing the protrusion 30, and a pressure switch 32 in the protrusion receiver 31. The open/close detection means is structured by the protrusion 30 and the pressure switch 32, and the pressure switch 32 corresponds to the open/close detection switch 20 in Fig. 18.

When the display panel frame 7 is closed, the protrusion 30 entgers the protrusion receiver 31 and presses the pressure switch 32, and hence it is turned on. In a state where the display panel frame 7 is opened, the protrusion 30 is moved away from the protrusion receiver 31, so that the pressure switch 32 is not pressed, and hence it is turned off.

Although the protrusion 30 is provided on the display panel frame 7 and the pressure switch 32 is provided on the apparatus body 8 in Fig. 20, they may be provided vice versa, namely, the protrusion 30 may be provided on the apparatus body 8 and the pressure switch 32 may be provided on the display panel frame 7.

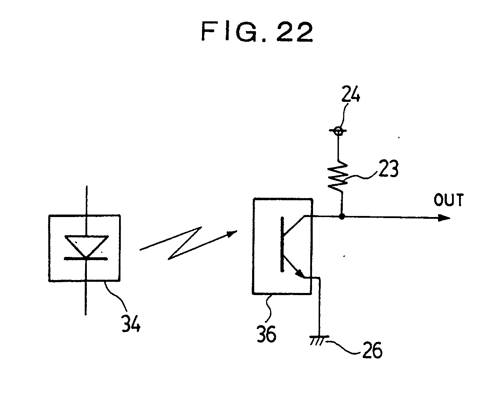

Fig. 21 and Fig. 22 show another example of open/close detection means comprising a light emitting part 34 and a light receiving part 36 provided in a sensor window 35.

The light emitting part 34 is formed of infrared light emitting diode (hereinafter referred'to as infrared LED) as shown in Fig. 22, and it is provided at a portion close to a shaft 9 on the lower portion of the front face of the display panel frame 7 integrated with the liquid crystal display panel 25 as shown in Fig. 21. The light emitting part 34 intermittently emits light by a light emitting circuit, not shown.

The sensor window 35 is provided on the apparatus body 8 opposite to the light emitting part 34, and it has the light receiving part 36 therein. The light receiving part 36 is formed of a photosensor such as a photo-transistor and the like as shown in Fig. 22, and a current flows (or current is increased) when it receives infrared light from the light emitting part 34, and it corresponds to the open/close detection switch 20 shown in Fig. 18.

When the display panel frame 7 is closed, the light emitting part 34 opposes the light receiving part 36 via the sensor window 35 so that infrared light from the light emitting part 34 falls on the light receiving part 36, thereby turning on the photosensor.

The light receiving part 36 shown in Fig. 22 is formed of a photo-transistor, and a collector thereof is connected to an H logic power supply 24 via a pull-up resistor 23 while an emitter thereof is connected to an L logic power supply 26.

Accordingly, since the light emitting part 34 is held at an angle not less than 90° relative to the sensor window 35 in a state where the liquid crystal display panel 25 is opened, infrared light from the light emitting part 34 does not fall on the light receiving part 36. Accordingly, the photo-transistor of the light receiving part 36 is in an off state where a resistance value between the collector and emitter becomes high so that an output signal OUT becomes at high level by the H logic power supply 24.

When the liquid crystal display panel 25 is gradually closed, a part of infrared light emitted from the light emitting part 34 falls on the light receiving part 36. When the liquid crystal display panel 25 is further gradually closed, most of infrared light from the light emitting part 34 falls on the light receiving part 36. In this state, the photo-transistor of the light receiving part 36 becomes in an on state where a resistance value between the collector and emitter becomes the minimum so that the output signal OUT becomes at low level by the H logic power supply 24.

Accordingly, when the output signal OUT is inputted to the vertically switching terminal 27 of the scan driving IC 22 as shown in Fig. 18, the display of the liquid crystal display panel 25 can be turned upside down.

The open/close detection means is formed of opto-electronic means, and hence it is excellent because there does not occur an erroneous operation owing to a mechanical abrasion of breakage.

Although the light emitting part 34 is formed of the infrared LED but it may be formed of a device other than the infrared emitting light device if a detected wavelength region of the light receiving part 36 includes an emitting light wavelength of the light emitting part 34. For example, the light emitting part 34 may be formed of a visible red LED. If the light emitting part 34 is formed of the visible red LED, it serves as a lamp for displaying the state of a power on of the apparatus body 8 and a light emitting part for the open/close detection means. Further, since it is not necessary to separately provide a light emitting part for the open/close detection means, the number of constituent members can be reduced and also power consumption can be reduced.

Still further, although the photosensor is used in the third embodiment, other sensors may be employed. For example, even if an inclined sensor is employed, it can detect open/close state of the liquid crystal display panel 25.

The liquid crystal display panel 25 of the third embodiment is used as the liquid crystal display panel according to previous embodiments, the liquid crystal display panel 5 or the liquid crystal display panel 15 of the first and second embodiments may be used.

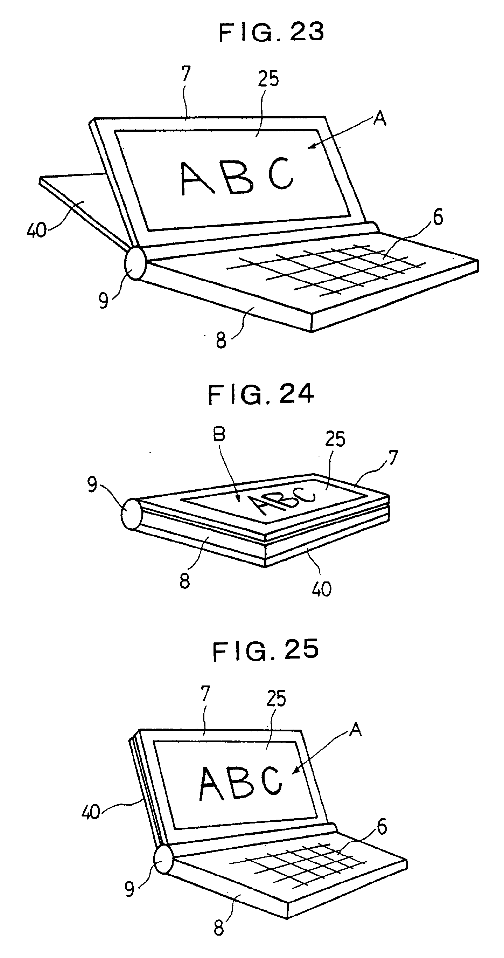

### Fourth Embodiment of Electronic Apparatus: Fig. 23 to Fig. 29

A fourth embodiment of an electronic apparatus according to the invention is described next with reference to Fig. 23 to Fig. 29.

Fig. 23 to Fig. 25 are schematic perspective views of the electronic apparatus according to the fourth embodiment wherein basic examples thereof are used in different use conditions. As shown in these figures, the difference between the electronic apparatus of the fourth embodiment is different from those of the first to third embodiments in respect of the provision of a protective cover 40 which is turnably pivoted by a shaft 9 relative to an apparatus body 8 and a display panel frame 7 at the back surface of the display panel frame 7 which is integrated with a liquid crystal display panel 25. Other constituent members of the apparatus of the fourth embodiment are the same as those of the first to third embodiments, and hence only the different point is described hereinafter.

The protective cover 40 is a plate-like member having an outer shape which is substantially the same as that of the display panel frame 7. In a state where the protective cover 40 together with the display panel frame 7 are overlaid on the apparatus body 8 to be rendered in a close state, the electronic apparatus not only becomes excellent in portability and in a compact state but also prevents the liquid crystal display panel 25 from being broken by an external shock and the like because a second display face B of the liquid crystal display panel 25 is protected by the protective cover 40.

If only the protective cover 40 is turned from the close state so that it is opened to move away from the liquid crystal display panel 25, the display of the second display face B of the liquid crystal display panel 25 can be viewed. Further, if the protective cover 40 is turned about 360° so as to overlay on the lower surface of the apparatus body 8 as shown in Fig. 24, the display of the liquid crystal display panel 25 can be viewed without deteriorating the portability thereof.

When a user opens the display panel frame 7 in a state where the protective cover 40 and the display panel frame 7 are overlaid on the apparatus body 8 to be rendered in a close state, the protective cover 40 is opened while the second display face B of the liquid crystal display panel 25 is covered therewith as shown in Fig. 25. In this state, although the user of the electronic apparatus can view a first display face A of the liquid crystal display panel 25, a black display of the first display face A becomes dense so as to render the display to be in high contrast if at least a surface of the protective cover 40 opposite to the liquid crystal display panel is rendered dark such as black and the like.

Since the display of the second display face B of the liquid crystal display panel 25 cannot be viewed from the back side of the electronic apparatus, a person who is in an opposite side of the user is prohibited from viewing information displayed on the liquid crystal display panel 25 such as an address book, telephone book and the like when using the electronic apparatus on the desk and the like.

However, if it is intended that the second display face B of the liquid crystal display panel 25 is viewed, the protective cover 40 is turned to move away from the display panel frame 7 so as to open only the protective cover 40 as shown in Fig. 23.

Meanwhile, although incident light is transmitted through the liquid crystal display panel 5 or the liquid crystal display panel 25 and is emitted toward the opposite face of the liquid crystal display panel when a voltage is applied to the liquid crystal cell 3 or the STN liquid crystal cell 13 according to the electronic apparatuses of the first and second embodiments of the invention, the electronic apparatuses of the first and second embodiments of the invention are structured such that a portion where a voltage is applied becomes black display since there is no reflective layer therein.

Even though the electronic apparatus of the first and second embodiments of the invention can obtain white-and-black display in sufficient contrast, but there is a possibility that contrast is lowered to some extent in the case when intensified incident light falls on from the back face side of the liquid crystal display panel 25. Accordingly, an absorption layer may be disposed on a face opposite to a visible side of the liquid crystal display panel so as to positively absorb light transmitted through the liquid crystal display panel.

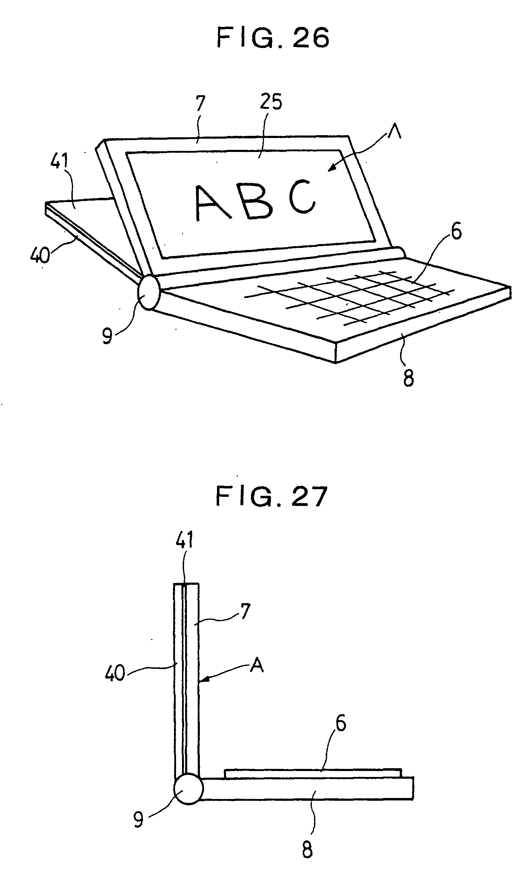

Fig. 27 is a perspective view showing an example of an electronic apparatus having a construction to achieve the above function. The electronic apparatus shown in Fig. 27 has a light absorption member 41 which is bonded to the surface of the protective cover 40 for covering the liquid crystal display panel 25. For the light absorption member 41, a PET film which is dyed black can be employed and it is bonded to the surface of the protective cover 40 by a transparent adhesive on the side of the liquid crystal display panel 25.

In a state where the display panel frame 7 and protective cover 40 are all closed, the electronic apparatus is rendered excellent in portability, and also since the protective cover 40 protects the second display face B of the liquid crystal display panel 25, the electronic apparatus can be prevented being broken from an external shock. This is the same as the previous case.

When a user opens the display panel frame 7 and the protective cover 40 as shown in Fig. 27 from a state where they are closed, the protective cover 40 is opened together with the display panel frame 7 while it covers the second display face B of the liquid crystal display panel 25. Accordingly, the light absorption member 41 on the protective cover 40 is disposed on the side opposite to the first display face A of the liquid crystal display panel 25. At this time, on the side of the background incident light falling from the visible side of a user (the first display face A side) on the liquid crystal display panel 25 is reflected by an optical filter disposed on the back side of the liquid cell and is returned to the visible side, thereby obtaining a white display. Since the displayed part of the characters and the like are transmitted through the optical filter disposed on the back side of the liquid crystal cell and is absorbed by the light absorption member 41 disposed on the protective cover 40, it becomes a black display.

As mentioned above when light transmitted through the liquid crystal display panel 25 is positively absorbed by the light absorption member 41, the black display becomes more dense and clear so that of display in contrast is markedly improved. Further, intensified light is prohibited to fall on from the back face of the liquid crystal display panel 25, contrast of the first display face A of the liquid crystal display panel 25 is not deteriorated.

Although there was explained an example using the black PET film for the light absorption member 41, the protective cover 40 per se may exhibits the function of the light absorption member 41 by forming the protective cover 40 per se by black resin. It is evident that the same effect can be obtained even if the protective cover 40 is coated black. It is not necessary that the light absorption member 41 absorbs all wavelengths in a visible range, and if the light absorption member 41 which absorbs only a specific wavelength is employed, reflected light is colored, thereby displaying colored characters.

In such a manner, the electronic apparatus realizes display in very high contrast without being affected by an external light and is improved in crash-proof by the provision of the protective cover 40.

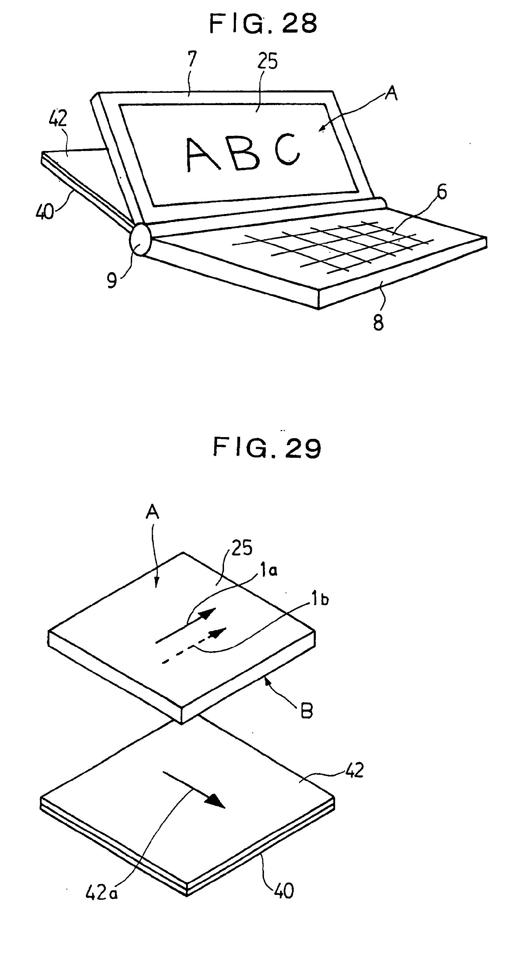

An example of an electronic apparatus provided with another protective cover is described with reference to Fig. 28 and Fig. 29.

Since light which is transmitted through a liquid crystal display panel 25 is linearly polarized light, the same effect as the previous example can be obtained even if the light absorption-type polarizing film is used for a light absorption member.

With electronic apparatus shown in Fig. 28, a light absorption-type polarizing film 42 is bonded to and disposed on the surface of a protective cover 40 on the side of the liquid crystal display panel 25 by a relatively transparent adhesive. With the electronic apparatus having such a construction, it can be structured that it is excellent in portability in a state where the apparatus body 8, display panel frame 7 and protective cover 40 are all closed, and further, since the protective cover 40 protects the outside of the liquid crystal display panel 25, and hence it can prevent the electronic apparatus from being broken by an external shock. If the protective cover 40 keeps to cover the second display face B of the liquid crystal display panel 25 in a state where the display panel frame 7 and protective cover 40 are opened relative to the apparatus body 8, the linearly polarized light transmitted through the liquid crystal display panel 25 is absorbed by the light absorption-type polarizing film 42, thereby obtaining white-and-black display in high contrast on the first display face A side.

Fig. 29 shows a configuration of the light absorption-type polarizing film 42 to be bonded to the protective cover 40 and the liquid crystal display panel 25. In the case of setting the liquid crystal display panel 25 to a normally white display having a white background, the direction of a transmittable axis 1a of the absorption-type polarizing film 1A over the liquid crystal display panel 25 and the direction of a transmittable axis 1b of the absorption-type polarizing film 1B under the liquid crystal display panel 25 accord with each other, as explained with reference to the foregoing embodiments. At this time, a transmittable axis 42a of the light absorption-type polarizing film 42 bonded to the protective cover 40 is arranged so as to substantially cross the transmittable axis 1b of the adjacent lower absorption-type polarizing film 1B at right angles.

With such an arrangement, when viewing from the first display face A side of the liquid crystal display panel 25, at the portion where a voltage is applied to the liquid crystal cell, light falling on from the visible side of the liquid crystal display panel 25 is transmitted through the upper absorption-type polarizing film, and also transmitted through the liquid crystal cell as it is, and further it is transmitted through the lower absorption-type polarizing film. Since the thus transmitted linearly polarized light component crosses a transmittable axis 46 of the light absorption-type polarizing film 42 at right angles which is arranged while bonded to the protective cover 40 in vibration direction, it is absorbed by the light absorption-type polarizing film 42 and is not returned to the first display face A side. Accordingly, the display such as characters and the like becomes dense black display.

When the linearly polarized light which is transmitted through the liquid crystal display panel 25 is absorbed by the light absorption-type polarizing film 42, enabling dense black display so that display in contrast can be further enhanced. Further, since the light absorption-type polarizing film 42 is bonded to and integrated with the protective cover 40, the display panel frame 7 may be opened integrally with the protective cover 40 when viewing from the first display face A side, rendering an operability excellent.

### INDUSTRIAL APPLICABILITY

As is evident from the foregoing explanation, according to the liquid crystal display panel of the invention, dual-sided display can be effected and display obtained by light returned to the visible side and light emitted to the opposite side can be distinctly differentiated from each other, thereby obtaining display in high contrast can be obtained on both faces. Further, since the thickness of the display panel is scarcely increased, and sufficiently clear display can be obtained without a backlight, thereby reducing power consumption.

Since the electronic apparatus employing the liquid crystal display panel can effect dual-sided display, it is possible to display in a case where the liquid crystal display panel is opened and in a case where the liquid crystal display panel is closed. Further, both displays have high contrast which are equal to each other at both faces. Still further, since display in high contrast without needing a backlight can be obtained even in a state where the liquid crystal display panel is closed, thereby reducing power consumption. Yet, the dual display can be effected and the display can be viewed without opening the liquid crystal display panel, and further, convenience when viewing the display is excellent. Still further, the electronic apparatus is provided with the keyboard, operability when inputting characters and the like is excellent.

The invention can be widely used for electronic apparatuses including various down-sized electronic apparatus such as notebook computer, notebook word processor, and portable information instrument such as electronic databook, electronic dictionary, portable telephone, a PDA, and the like.

## Claims

1. A liquid crystal display panel comprising:
a liquid crystal cell formed of a pair of transparent substrates having transparent electrodes on the opposite inner surfaces thereof and a liquid crystal layer sealed between the pair of transparent substrates;
optical filters disposed on both sides of the liquid crystal cell, each optical filter transmitting a linearly polarized light which vibrates in a direction parallel with a transmittable axis thereof, and each optical filter reflecting a linearly polarized light which vibrates in a direction crossing a transmittable axis thereof at right angles; and
absorption-type polarizing films disposed outside the respective optical filters, each absorption-type polarizing film transmitting a linearly polarized light which vibrates in a direction parallel with a transmittable axis thereof, and each absorption-type polarizing film absorbing a linearly polarized light which vibrates in a direction crossing a transmittable axis thereof at right angles;
wherein the optical filter and the absorption type polarizing film disposed on the same side of the liquid crystal cell are arranged such that respective transmittable axial directions thereof substantially align with each other.

2. The liquid crystal display panel according to Claim 1, wherein a light scattering member is disposed in at least one space of a space between said liquid crystal cell and one optical filter and a space between said liquid crystal cell and the other optical filter.

3. The liquid crystal display panel according to Claim 1, wherein said optical filters are formed of reflection-type polarizing films.

4. The liquid crystal display panel according to Claim 2, wherein said optical filters are formed of reflection-type polarizing films.

5. The liquid crystal display panel according to Claim 1, wherein said optical filters are constructed by disposing quarter-wavelength plates on both sides of a separating sheet for circularly polarized light which reflects one part of right-circularly polarized light component and left-circularly polarized light component of incident light while transmits the other part thereof.

6. The liquid crystal display panel according to Claim 2, wherein said optical filters are constructed by disposing quarter-wavelength plates on both sides of a separating sheet for circularly polarized light which reflects one part of right-circularly polarized light component and left-circularly polarized light component of incident light while transmits the other part thereof.

7. The liquid crystal display panel according to any of Claims 1 to 6, wherein the liquid crystal layer of said liquid crystal cell is formed of supertwisted nematic liquid crystal and an optical retardation compensation film is disposed on one surface of the liquid crystal cell.

8. The liquid crystal display panel according to any of Claims 1 to 6, wherein the liquid crystal layer of said liquid crystal cell is formed of twisted nematic liquid crystal.

9. An electronic apparatus comprising a liquid crystal display panel and an apparatus body provided with an operating function section, wherein the liquid crystal display panel and the apparatus body are turnably connected to each other, and the liquid crystal display panel comprises:
a pair of transparent substrates having transparent electrodes on the opposite inner surfaces thereof and a liquid crystal layer sealed between the pair of transparent substrates;
optical filters disposed on both sides of the liquid crystal cell, each optical filter transmitting a linearly polarized light which vibrates in a direction parallel with a transmittable axis thereof, and each optical filter reflecting a linearly polarized light which vibrates in a direction crossing a transmittable axis thereof at right angles; and
absorption-type polarizing films disposed outside the respective optical filters, each absorption-type polarizing film transmitting a linearly polarized light which vibrates in a direction parallel with a transmittable axis thereof, and each absorption-type polarizing film absorbing a linearly polarized light which vibrates in a direction crossing a transmittable axis thereof at right angles; and
wherein the optical filter and the absorption type polarizing film disposed on the same side of the liquid crystal cell are arranged such that respective transmittable axial directions thereof substantially align with each other.

10. The electronic apparatus according to Claim 9, wherein a light scattering member is disposed in at least one space of a space between the liquid crystal cell of said liquid crystal display panel and one optical filter and a space between the liquid crystal cell and the other optical filter.

11. The electronic apparatus according to Claim 9, wherein the optical filters of said liquid crystal display panel are formed of reflection-type polarizing films.

12. The electronic apparatus according to Claim 9, wherein the optical filters of said liquid crystal display panel are constructed by disposing quarter-wavelength plates on both sides of a separating sheet for circularly polarized light which reflects one part of right-circularly polarized light component and left-circularly polarized light component of incident light while transmits the other part thereof.

13. The electronic apparatus according to any of Claims 9 to 12,
wherein a pen tablet is disposed on at least one side of said liquid crystal display panel for inputting information through a pen.

14. The electronic apparatus according to any of Claims 9 to 12, further comprising open/close detection means for detecting an open/close state of the liquid crystal display panel relative to the apparatus body and inverting means for inverting the display by the liquid crystal display panel in the direction of at least vertical or horizontal direction either at an open state or at a close state in response to the result of detection by the open/close detection means.

15. The electronic apparatus according to Claim 14, wherein said open/close detection means comprises a protrusion provided on either side of said liquid crystal display panel or said apparatus body, and a press-type switch provided on the other side thereof so as to oppose the protrusion.

16. The electronic apparatus according to Claim 14, wherein said open/close detection means comprises a light emitting portion provided on either side of the liquid crystal display panel or the apparatus body, and light receiving portion having a photosensor provided on the other side thereof so as to oppose the light emitting portion.

17. The electronic apparatus according to any of Claims 9 to 12, further comprising a protective cover turnably attached onto said apparatus body and the protective cover is capable of covering said liquid crystal display panel from the outside.

18. The electronic apparatus according to Claim 17, further comprising a light absorbing member disposed on the face of said protective cover opposite to said liquid crystal display panel.

19. The electronic apparatus according to Claim 17, further comprising an absorption-type polarizing film disposed on the face of said protective cover opposite to said liquid crystal display panel, and wherein a transmittable axis of the absorption-type polarizing film and a transmittable axis of the absorption-type polarizing film disposed on the side of said protective cover of said liquid crystal display panel cross each other at right angles.

20. The liquid crystal display panel according to any of Claims 9 to 12, wherein the liquid crystal layer of said liquid crystal cell is formed of supertwisted nematic liquid crystal and an optical retardation compensation film is disposed on one surface of the liquid crystal cell.
